(19) **Europäisches Patentamt / European Patent Office / Office européen des brevets**

(11) **EP 4 570 761 A1**

(12) # EUROPEAN PATENT APPLICATION

(43) Date of publication:
**18.06.2025 Bulletin 2025/25**

(21) Application number: **23215890.7**

(22) Date of filing: **12.12.2023**

(51) International Patent Classification (IPC):
**C01G 53/00** (2025.01)

(52) Cooperative Patent Classification (CPC):
**C01G 53/00; C01P 2002/54; C01P 2004/51; C01P 2004/61; C01P 2006/12**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **BASF SE**
**67056 Ludwigshafen am Rhein (DE)**

(72) Inventors:
- **Krippels, Uwe**
  **67056 Ludwigshafen am Rhein (DE)**
- **Schroedle, Simon**
  **68163 Mannheim (DE)**
- **Ryll, Thomas Michael**
  **68163 Mannheim (DE)**
- **Beierling, Thorsten**
  **38300 Wolfenbuettel (DE)**

(74) Representative: **BASF IP Association**
**BASF SE**
**GBI - Z078**
**67056 Ludwigshafen (DE)**

(54) **PROCESS FOR MAKING A PARTICULATE (OXY)HYDROXIDE, AND SET-UP USEFUL FOR SUCH PROCESS**

(57)     Process for making a particulate (oxy)hydroxide or carbonate of TM wherein TM comprises nickel and at least one metal selected from cobalt and manganese wherein said process comprises the steps of:
(a) Providing at least one aqueous solution (α) containing a water-soluble salt of Ni and at least one water-soluble salt of Co or of Mn, and an aqueous solution (β) containing an alkali metal hydroxide or carbonate and, optionally, an aqueous solution (γ) containing a complexing agent selected from ammonia, an organic acid or its alkali metal salt,
(b) combining solutions (α) and (β) and, if applicable, solution (γ), in a reaction vessel, thereby creating solid particles of a hydroxide or carbonate of TM and forming a slurry,
(c) determining the pH value of the slurry formed in step (b) with a set-up comprising the following parts:
(A) a piping connected to the reaction vessel in which step (b) is performed, and having an inlet from said reaction vessel,
(B) a first equipment vessel connected to the piping (A) where the slurry is allowed to adapt to a predefined measuring temperature ±5°C, and to settle,
(C) a second equipment vessel connected to equipment vessel (B) in a way that clarified liquid phase from equipment vessel (B) can be transferred to equipment vessel (C) equipped with a calibrated pH probe, and, optionally,
(D) a piping connecting equipment vessel (C) and the reaction vessel in which step (b) is performed.

EP 4 570 761 A1

**Description**

The present invention is directed towards a process for making a particulate (oxy)hydroxide or carbonate of TM wherein TM comprises nickel and at least one metal selected from cobalt and manganese wherein said process comprises the steps of:

(a) Providing at least one aqueous solution ($\alpha$) containing a water-soluble salt of Ni and at least one water-soluble salt of Co or of Mn, and an aqueous solution ($\beta$) containing an alkali metal hydroxide or carbonate and, optionally, an aqueous solution ($\gamma$) containing a complexing agent selected from ammonia, an organic acid or its alkali metal salt,

(b) combining solutions ($\alpha$) and ($\beta$) and, if applicable, solution ($\gamma$), in a reaction vessel, thereby creating solid particles of a hydroxide or carbonate of TM and forming a slurry,

(c) determining the pH value of the slurry formed in step (b) with a set-up comprising the following parts:

(A) a piping connected to the reaction vessel in which step (b) is performed, and having an inlet from said reaction vessel,
(B) a first equipment vessel connected to the piping (A) where the slurry is allowed to adapt to a predefined measuring temperature $\pm 5°C$, and to settle,
(C) a second equipment vessel connected to equipment vessel (B) in a way that clarified liquid phase from equipment vessel (B) can be transferred to equipment vessel (C) equipped with a calibrated pH probe, and, optionally,
(D) a piping connecting equipment vessel (C) and the reaction vessel in which step (b) is performed.

Lithiated transition metal oxides are currently being used as electrode active materials for lithium-ion batteries. Extensive research and developmental work have been performed in the past years to improve properties like charge density, specific energy, but also other properties like the reduced cycle life and capacity loss that may adversely affect the lifetime or applicability of a lithium-ion battery. Additional effort has been made to improve manufacturing methods.

In a typical process for making cathode materials for lithium-ion batteries, first a so-called precursor is being formed by co-precipitating the transition metals preferably as hydroxides that may or may not be basic, for example oxyhydroxides. Hydroxides may be pre-calcined and turned into oxides or oxyhydroxides, or they are directly mixed with a source of lithium such as, but not limited to LiOH, LizO, $Li_2O_2$ or $Li_2CO_3$ and calcined (fired) at high temperatures. Source of lithium can be employed as hydrate(s) or in dehydrated form. The calcination - or firing - often also referred to as thermal treatment or heat treatment of the precursor - is usually carried out at temperatures in the range of from 600 to 1,000 °C. During the thermal treatment a solid-state reaction takes place, and the electrode active material is formed. The thermal treatment is performed in the heating zone of an oven or kiln.

A typical class of cathode active materials delivering high energy density contains a high amount of Ni (Ni-rich), for example at least 80 mol-%, referring to the content of non-lithium metals. However, the energy density still needs improvement. In other classes, the manganese content (Mn-rich) is at least 60 mol-%.

To a major extent, properties of the precursor translate into properties of the respective electrode active material, such as particle size distribution, content of the respective transition metals and more. It is therefore possible to influence the properties of electrode active materials by steering the properties of the precursor. An important aspect is the pH value that requires careful control. However, it is sometimes difficult to determine the pH value of hot stirred slurries - the abrasion caused by the solid particles may damage the probe, and it takes effort to adjust the temperature before measurement.

It was therefore an objective of the present invention to provide a process for making precursors for electrode active materials with high energy density and a simple process for manufacturing them.

Accordingly, the process as defined at the outset has been found, hereinafter also referred to as "inventive process" or "process according to the (present) invention". In addition, the set-up as defined at the outset has been found, hereinafter also defined as "inventive set-up" or "set-up according to the (present) invention". The inventive process comprises step (a), step (b) and step (c), hereinafter also referred to as (a), (b) or (c), respectively. The inventive set-up comprises parts (A) to (D), hereinafter also referred to as part (A) or as (A), as part (B) or as (B), as part (C) or as (C), or as part (D) or as (D), respectively. Steps (a), (b) and (c) as well as parts (A) to (D) will be described in more detail below.

In the context of the present invention, the terms "determining the pH value" and "measuring the pH value" and related expressions are used interchangeably.

The inventive process is suitable for making a particulate (oxy)hydroxide or carbonate of TM, hereinafter also referred to as precursors. TM comprises metals, and TM comprises Ni and at least one transition metal selected from Co and Mn, and, optionally, at least one further metal selected from Ti, Zr, Mo, W, Al, Mg, Nb, and Ta.

The resultant (oxy)hydroxide of TM is in particulate form. The particles size distribution may be determined by light scattering or LASER diffraction or electroacoustic spectroscopy, LASER diffraction being preferred.

In one embodiment of the present invention, inventive precursors are selected from (oxy)hydroxides and carbonates of TM wherein TM is a combination of metals according to general formula (I)

$$(Ni_aCo_bMn_c)_{1-d}M_d \qquad (I)$$

with

a being in the range of from 0.6 to 0.98,
b being zero or in the range of from zero to 0.2,
c being in the range of from zero to 0.2, and
d being in the range of from zero to 0.1,
M being selected from Mg, Al, Ti, Zr, Mo, W, Nb, and Ta,
a + b + c = 1, and b + c > zero. Even more preferably, at least one of b and c is in the range of from 0.025 to 0.1.

In other embodiments, TM is selected from (oxy)hydroxides and carbonates of TM wherein TM is a combination of metals according to general formula (II)

$$(Ni_eCO_fMn_g)_{1-d}M_d \qquad (II)$$

with

e being in the range of from 0.2 to 0.5, preferably from 0.2 to 0.4,
f being zero or in the range of from 0.01 to 0.2,
g being in the range of from 0.5 to 0.8, preferably from 0.5 to 0.7, and
d being in the range of from zero to 0.1,
M being selected from Mg, Al, Ti, Zr, Mo, W, Nb, and Ta,

$$e + f + g = 1$$

TM may contain traces of further metal ions, for example traces of ubiquitous metals such as sodium, calcium or zinc, as impurities but such traces will not be taken into account in the description of the present invention. Traces in this context will mean amounts of 0.05 mol-% or less, referring to the total metal content of TM.

Preferably, said particulate precursor has a span in the range of from 0.4 to 3, the span being calculated as (D90)-(D10) divided by (D50). Said span refers to the span of the entire material. (D10) refers to the median value of 10%, (D90) refers to a median value of 90%, and D50 refers to a median value of 50%, each referring to the volume-based particle diameter.

In one embodiment of the present invention, the particle shape of the secondary particles of the resultant precursors is spheroidal, that are particles that have a spherical shape. Spheroidal shall include not just those which are exactly spherical but also those particles in which the maximum and minimum diameter of at least 90% (number average) of a representative sample differ by not more than 10%.

In one embodiment of the present invention the specific surface (BET) of the resultant precursors is in the range of from 2 to 60 m$^2$/g, determined by nitrogen adsorption, for example in accordance with to DIN-ISO 9277:2003-05.

Step (a) includes providing at least one aqueous solution ($\alpha$) containing a water-soluble salt of Ni and at least one water-soluble salt of Co or of Mn, and an aqueous solution ($\beta$) containing an alkali metal hydroxide or carbonate and, optionally, an aqueous solution ($\gamma$) containing a complexing agent selected from ammonia, an organic acid or its alkali metal salt. Said aqueous solution ($\alpha$) may contain at least one further metal selected from Ti, Zr, Mo, W, Al, Mg, Nb, and Ta, preferably as water-soluble compound.

The term water-soluble salts of nickel and cobalt or manganese or of metals other than nickel and cobalt and manganese refers to salts that exhibit a solubility in distilled water at 25°C of 25 g/l or more, the amount of salt being determined under omission of crystal water and of water stemming from aquo complexes. Water-soluble salts of nickel and cobalt and manganese may preferably be the respective water-soluble salts of Ni$^{2+}$ and Co$^{2+}$ and Mn$^{2+}$. Examples of water-soluble salts of nickel and cobalt are the sulfates, the nitrates, the acetates and the halides, especially chlorides. Preferred are nitrates and sulfates, of which the sulfates are more preferred.

Said aqueous solution ($\alpha$) preferably contains Ni and further metal(s) in the relative concentration that is intended as TM of the precursor, or in one of the fractions of the precursor.

Said aqueous solution ($\alpha$) preferably contains Ni and, optionally, further metal(s) in a total concentration of from 0.5 to 2.2 mol/l.

Solution (α) may have a pH value in the range of from 2 to 5. In embodiments wherein higher pH values are desired, ammonia may be added to solution (α). In other embodiments, no ammonia is added to solution (α).

In step (a), in addition an aqueous solution of alkali metal hydroxide or carbonate is provided, hereinafter also referred to as solution (β). An example of alkali metal hydroxides is lithium hydroxide, preferred is potassium hydroxide and a combination of sodium and potassium hydroxide, and even more preferred is sodium hydroxide. An example of alkali metal carbonates is potassium carbonate and sodium carbonate and mixtures, with sodium carbonate being preferred.

In embodiments wherein solution (β) contains alkali metal hydroxide, said solution (β) may additionally contain some amount of carbonate, e.g., 0.1 to 2 % by weight, referring to the respective amount of alkali metal hydroxide, added deliberately or by aging of the solution or the respective alkali metal hydroxide.

Solution (β) may have a concentration of alkali metal hydroxide or carbonate in the range from 0.1 to 12 mol/l, preferably 6 to 10 mol/l.

The pH value of solution (β) is preferably 13 or higher, for example 14.5. In the context of the present invention, pH values are determined at 23°C unless specifically noted otherwise. In embodiments wherein solution (β) is a solution of an alkali metal carbonate, the pH value may be in the range of from 8.5 to 12.

In the inventive process, it is preferred to use ammonia and/or at least one further complexing agent. Said ammonia may be provided as solution (γ) or in solution (β).

In the inventive process, it is preferred to use ammonia in solution (γ). Solution (γ) may then contain a complexing agent selected from ammonia, glycine, tartrate, citrate, and oxalate. In the context of the present invention, the term glycine includes the compound glycine and its alkali metal salts, for example the potassium or preferably the sodium salt. The terms tartrate and oxalate include the respective free acids and the mono- and dialkali metal salts, for example the mono- or di-potassium salts or the mono- or disodium salts or mixed sodium and potassium salts. The term citrate includes citric acid and its alkali metal salts, for example the mono- or di- or trisodium salts and the mono-, di- and tripotassium salts.

In one embodiment of the present invention, solution (γ) has an ammonia concentration in the range of from 1 to 30% by weight.

In one embodiment of the present invention, solution (γ) contains in the range of from 0.05 to 1.0 mol-%, referring to TM, of a complexing agent selected from glycine, tartrate, citrate, and oxalate, or their respective alkali metal salts. In other embodiments, solution (γ) contains ammonia as the sole complexing agent.

Solution (γ) may have a pH value in the range of from 8 to 10.

Step (b) includes combining solution (α) and solution (β) and, if applicable, solution (γ), in a reaction vessel, thereby creating solid particles of a hydroxide or carbonate of TM and forming a slurry.

In one embodiment, step (b) is performed by addition of hydroxide at a pH value in the range of from 10.0 to 14.0, preferably 11 to 12.2, thereby creating particles of a hydroxide of TM. Said particles are slurried in an aqueous medium. In other embodiments, step (b) is performed by addition of carbonate at a pH value in the range of from 7.0 to 11.0, preferably 7.5 to 9.0, thereby creating particles of a carbonate of TM. Said particles are slurried in an aqueous medium.

In one embodiment of the present invention, step (b) is performed at a temperature in the range from 10 to 85°C, preferably at temperatures in the range from 40 to 65°C.

In one embodiment of the present invention, step (b) is performed at a pressure in the range of from 500 mbar to 10 bar absolute, preferably at ambient pressure.

In one embodiment of the present invention, a compound of a metal M selected from Mg, Al, Ti, Zr, Mo, W, Nb, and Ta is added as an aqueous solution (δ) or in solution (α). Such addition is performed in step (b) and preferably means the addition of a water-soluble compound of M. Examples of water-soluble compounds of Mg and Al are halides such as chlorides, acetate, nitrate and sulfate. A further preferred example is sodium aluminate. $AlF_3$ is not preferred. Examples of water-soluble compounds of Ti and Zr are basic and non-basic sulfates and nitrates and halides such as the chloride. Examples of compounds of Mo and W are alkali molybdates and tungstates.

In other embodiments, a compound of M selected from Mg, Al, Ti, Zr, Mo, W, Nb, and Ta is added as in solution (β), for example sodium aluminate.

Step (b) may be performed in a continuous mode, for example in a plug flow reactor or in a cascade of two or more continuous stirred tank reactors, preferably, in a single continuous stirred tank reactor, for example in a continuous stirred tank reactor with an overflow system. In other embodiments, step (b) may be performed as a batch process, for example in a stirred tank reactor.

In one embodiment of the present invention, step (b) is performed in a continuous stirred tank reactor operated with an average residence time in the range of from 1 hour to 12 hours, preferably from 3 hours to 7 hours.

In step (c), the pH value of the slurry formed in step (b) is determined with a set-up comprising the following parts:

(A) a piping, hereinafter also referred to as part (A) or piping (A), that is connected to the reaction vessel in which step (b) is performed, and that has an inlet from said reaction vessel, hereinafter also referred to as part (A) or piping (A),

(B) a first equipment vessel connected to the piping (A) where the slurry is allowed to adapt to a predefined measuring temperature ±5°C, and to settle,

(C) a second equipment vessel connected to equipment vessel (B) in a way that clarified liquid phase from equipment vessel (B) can be transferred to equipment vessel (C) equipped with a calibrated pH probe, and, optionally,

(D) a piping connecting equipment vessel (C) and the reaction vessel in which step (b) is performed.

The set-up is described in more detail below.

Part (A) is a piping connected to the reaction vessel in which step (b) is performed, and part (A) has an inlet from said reaction vessel. The inlet may be a valve, for example a 3-way valve.

Said inlet may be opened or closed if desired. When said inlet is opened, slurry from the reaction vessel enters the piping through the inlet.

Said inlet may be located anywhere at the vessel in which step (b) is performed as far as said location is below the filling level. It is preferred that the inlet is in the lower part of the vessel.

In one embodiment of the present invention, piping (A) may have an inner diameter in the range of from 5 to 50 mm.

In one embodiment of the present invention, piping (A) has a length in the range of from 0.5 to 50 m, preferably 1 to 10 m.

Piping (A) may be made from stainless steel or from a polymer that is base-stable, for example polyethylene, polypropylene, polytetrafluoroethylene, fluorinated ethylene propylene ("FEP") such as Teflon®, or perfluoroalkoxy alkanes (copolymers from tetrafluoroethylene and perfluoralkoxy vinyl ethers.

Part (B) is also called "equipment vessel (B)". In equipment vessel (B), the slurry withdrawn from the reaction vessel in step (c) is allowed to adapt to a predefined measuring temperature ±5°C, and to settle.

The pre-defined temperature in equipment vessel (C) may be a specific value or a temperature interval. Preferably, the pre-defined temperature in equipment vessel (C) is in the range of from 20 to 25°C. In such embodiments, the temperature of the slurry in equipment vessel (B) is allowed to adapt to 15 to 30°C. In embodiments where the pre-defined temperature in equipment vessel (C) is, e.g., 23°C, the temperature of the slurry in equipment vessel (B) is allowed to adapt to 18 to 28°C, preferably 25 to 28°C. This may be done with the help of a cooling mantle, for example in combination with a thermostat.

In one embodiment of the present invention, equipment vessel (B) has the shape of a tube, for example equipment vessel (B) is tube-shaped with a length to diameter ratio in the range of from 10:1 to 100:1, preferably from 20:1 to 50:1.

In one embodiment of the present invention, equipment vessel (B) has an inner diameter in the range of from 10 to 100 mm, preferably 20 to 50mm.

In one embodiment of the present invention, equipment vessel (B) has a length in the range of from 150 mm to 10 m, preferably 500mm to 2m. The length corresponds to the height in the inventive set-up.

Equipment vessel (B) may be made from stainless steel or glass or from a polymer that is base-stable, for example polyethylene, polypropylene, polytetrafluoroethylene, fluorinated ethylene propylene ("FEP") such as Teflon®, or perfluoroalkoxy alkanes (copolymers from tetrafluoroethylene and perfluoralkoxy vinyl ethers

In equipment vessel (B), the slurry is allowed to settle. That shall imply that in equipment vessel (B) any agitation or stirring is avoided. The settling is preferably not complete but the majority of the particles formed and slurried in the course of step (b) is in the lower part of equipment vessel (B).

In one embodiment of the present invention, the slurry in equipment vessel (B) is allowed to settle until the upper part in equipment vessel (B) appears translucent. In other embodiments, the slurry in equipment vessel (B) is allowed to settle until the upper part in equipment vessel (B) appears only slightly turbid.

In one embodiment of the present invention, the residence time in equipment vessel (B) is in the range of from 1 to 60 minutes.

In one embodiment of the present invention, equipment vessel (B) is arranged vertically or with an inclination in the range of from 1 to 45°. In embodiments wherein equipment vessel (B) has such inclination it is observed the settling of the slurry occurs faster than in vertical equipment vessels (B). The inclination is compared to the vertical arrangement.

Next, a clarified portion of the slurry in equipment vessel (B) is transferred to a second equipment vessel that is connected to equipment vessel (B) and that is hereinafter also referred to as equipment vessel (C). Said transfer is effected in a way that clarified liquid phase from equipment vessel (B) is transferred to equipment vessel (C). Equipment vessel (C) is equipped with a calibrated pH probe that is then used for measuring the pH value. Calibrated pH probes are commercially available.

In one embodiment of the present invention, equipment vessel (C) has the shape of a tube, for example equipment vessel (C) is tube-shaped with a length to diameter ratio in the range of from 2:1 to 10:1, or it has the shape of a tank reactor without stirrer.

In one embodiment of the present invention, equipment vessel (C) has an inner diameter in the range of from 20 to 100 mm, preferably 30 to 60mm.

In one embodiment of the present invention, equipment vessel (C) has a length in the range of from 50 to 500 mm, preferably 100 to 300mm. The length corresponds to the height in the inventive set-up.

Equipment vessel (C) may be made from the same materials as equipment vessel (B).

In one embodiment of the present invention, the clarified liquid in equipment vessel (C) and the solids enriched slurry in equipment vessel (B) are discarded. Discarding may be effected by emptying the respective equipment vessels, for example through a valve in the bottom of the respective equipment vessel, followed by cleaning operations such as rinsing with water or with an acid such as, but not limited to sulfuric acid.

The pH value as determined in step (b) may then be collected electronically. It may then be compared to the targeted pH value manually or, preferably, electronically.

In one embodiment of the present invention, the inventive set-up comprises a piping (D) connecting equipment vessel (C) and the reaction vessel in which step (b) is performed. Such a piping allows to "recycle" parts of the slurry withdrawn for measurement in step (c).

The dimensions of piping (D) may be in the same dimensions as the dimensions of piping (A). The material of which piping (D) is made is preferably the same as one for piping (A). Piping (D) - if present - includes a valve that is opened when slurry is to be returned.

In other embodiments, the inventive set-up does not comprise a piping (D).

In one embodiment of the present invention, the inventive process comprises the additional step (d) of automatically adjusting the addition speed of solutions ($\alpha$) and ($\beta$), for example volume per time unit, and, if applicable, solution ($\gamma$), in case the pH value measured in step (c) deviates from a targeted pH value by more than 0.03 units, or at least more than 0.05 units. In embodiments wherein the determined pH value is found too low, said adjustment may be accomplished, e.g., by reducing the addition speed of solution ($\alpha$) and leaving the addition speed of solutions ($\beta$) and ($\gamma$) constant or raising the addition speed of at least one of solutions ($\beta$) and ($\gamma$), or by leaving the addition speed of solution ($\alpha$) constant and raising the addition speed of at least one of solutions ($\beta$) and ($\gamma$). In embodiments wherein the determined pH value is found too high, opposite measures are taken.

By performing the inventive process, the pH value during the reactions discussed at the outset may be measured quickly and accurately. The damage done to the sensitive equipment and especially the pH probe is reduced compared to other measures, and there is only very low exposure of humans to the basic slurry.

In one embodiment of the present invention, step (b) is performed in several reaction vessels, for example two to 20, and all of them are connected with equipment vessel (B).

A further aspect of the present invention is directed towards the set-up in which step (c) of the inventive process is performed, hereinafter also referred to as "inventive set-up". The inventive set-up comprising the following parts:

(A) a piping, hereinafter also referred to as part (A) or piping (A), that is connected to a reaction vessel, and that has an inlet from said reaction vessel, hereinafter also referred to as part (A) or piping (A),

(B) a first equipment vessel connected to the piping (A) where the slurry is allowed to adapt to a predefined measuring temperature $\pm 5°C$, and to settle,

(C) a second equipment vessel connected to equipment vessel (B) in a way that clarified liquid phase from equipment vessel (B) can be transferred to equipment vessel (C) equipped with a calibrated pH probe, and, optionally,

(D) a piping connecting equipment vessel (C) and the reaction vessel in which step (b) is performed.

Parts (A) to (C) and the optional part (D) have been described above and said description shall not be repeated here.

The reaction vessel connected to the piping (A) is the one in which step (b) is performed.

In one embodiment of the present invention, several reaction vessels are connected through a piping to equipment vessel (B), for example two to 20 reaction vessels, preferably 10 to 18. Valves secure that slurry from exactly one reaction vessel is transferred to equipment vessel (B) at a given time, and pH values determined are assigned to the correct reaction vessel. In such embodiments, it is preferred that equipment vessel (B) has an inclination (tilt).

In one embodiment of the present invention, the inventive set-up comprises a connection to equipment vessel (C) that may be opened and closed, for example with a valve, and that is attached to equipment vessel (B) in the upper two third height, preferably the upper half height. Said connection may have the shape of a tube, and it is preferably arranged horizontally or in a way that clarified slurry may flow upwards. The dimensions have been described above.

In one embodiment of the present invention, equipment vessel (C) comprises a heating or cooling element, for example a heating or cooling mantle that may be connected to a thermostat.

In one embodiment of the present invention, the equipment vessel (C) is equipped with a retractable fitting by which the pH measurement, the pH probe calibration, pH probe cleaning and pH probe storage is fully automated. Said full automatization may be steered by a computer program. The pH probe cleaning preferably includes rinsing with water and subsequent drying. Therefore, the inventive set-up preferably has its access to water.

The invention is further illustrated by two drawings and a working example.

Manufacture of a precursor, P-CAM.1

The following aqueous solutions were provided:

Solution ($\alpha$1): $NiSO_4$, $CoSO_4$ and $MnSO_4$, molar ratio 85:12:3, dissolved in deionized water, total transition metal concentration: 1.65 mol/kg

Solution ($\beta$1): 25wt% NaOH dissolved in deionized water

Solution ($\gamma$1): of 25wt% ammonia in deionized water

A 10 m³-stirred tank reactor (equipped with equipment vessel (B.1) and (C.1) is charged with 5,000 l deionized water containing 103 kg ammonia and heated to 55 °C under nitrogen atmosphere. Subsequently, solution ($\beta$1) and solution ($\alpha$1) are added in a way that the pH value at 23 °C is set to 12.05 and the stirrer is set to 1000 rpm. The tank reactor is then continuously fed with solutions ($\alpha$1), ($\beta$1) and ($\gamma$1) in a way that the pH value of the mother liquor is 12.05 and the molar ratio of $NH_3$ to the sum of Ni and Co and Mn in the reactor is 0.55. For this purpose, every ten minutes, slurry is removed from the tank reactor and transferred through a piping (A.1) to equipment vessel (B.1) through its inlet 5. In equipment vessel (B.1), the slurry is allowed to settle and to cool down to a temperature of 28°C within 10 minutes. Then, the almost clear slurry is transferred to equipment vessel (C.1) through discharge 3. The pH value is then determined. When it is found to be in the prescribed interval of $12.05 \pm 0.03$, no adjustment of the addition speeds of either solution ($\beta$1) and solution ($\alpha$1) and ($\gamma$1) is required.

During the reaction, mother liquor is separated from the solid and removed from the reactor by a clarifier attached to the top of the reactor. The individual flow rates of the solutions are adjusted to meet a residence time of 5 h. The stirrer speed is kept constant. The reaction is conducted for 18 hours. A hydroxide with a mean particle size (d50) = 11.0 $\mu$m is obtained and separated by filtration, washed with deionized water and an aqueous solution of sodium hydroxide (1kg solution ($\beta$1) per kg of filter cake), filtered and dried at 120 °C for 16 hours to obtain the precursor P-CAM.1 with molar composition of Ni:Co:Mn = 85:12.3, an average particle size (d50) = 10.5 $\mu$m and span = 0.7. The composition of P-CAM.1 is constant over the time of manufacture. In addition, the pH probe is not exposed to mechanical wear-off.

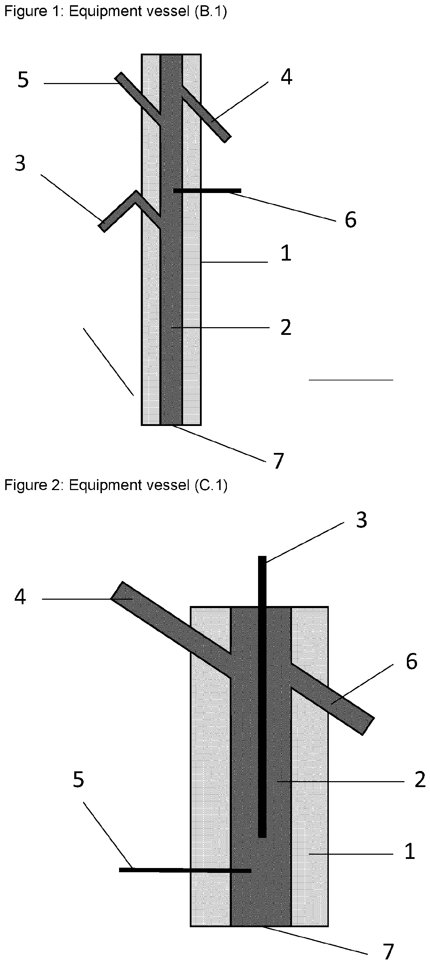

Figure 1: equipment vessel (B.1)

1 -  double jacket for temperature adjustment
2 -  inner pipe filled with slurry that undergoes sedimentation
3 -  discharge of clear or slightly turbid liquid into equipment vessel (C.1)
4 -  overflow to limit maximum volume in inner pipe
5 -  inlet connected to (A.1)
6 -  temperature sensor
7 -  discharge of slurry into waste or back to reactor

Figure 2: equipment vessel (C.1)

1 -  double jacket for temperature adjustment
2 -  inner pipe filled with liquid that undergoes pH measurement
3 -  calibrated pH probe
4 -  inlet
5 -  temperature sensor
6 -  overflow to limit volume
7 -  discharge of slurry into waste or back to reactor

**Claims**

1. Process for making a particulate (oxy)hydroxide or carbonate of TM wherein TM comprises nickel and at least one metal selected from cobalt and manganese wherein said process comprises the steps of:

   (a) Providing at least one aqueous solution ($\alpha$) containing a water-soluble salt of Ni and at least one water-soluble salt of Co or of Mn, and an aqueous solution ($\beta$) containing an alkali metal hydroxide or carbonate and, optionally, an aqueous solution ($\gamma$) containing a complexing agent selected from ammonia, an organic acid or its alkali metal salt,
   (b) combining solutions ($\alpha$) and ($\beta$) and, if applicable, solution ($\gamma$), in a reaction vessel, thereby creating solid particles of a hydroxide or carbonate of TM and forming a slurry,
   (c) determining the pH value of the slurry formed in step (b) with a set-up comprising the following parts:

(A) a piping connected to the reaction vessel in which step (b) is performed, and having an inlet from said reaction vessel,

(B) a first equipment vessel connected to the piping (A) where the slurry is allowed to adapt to a predefined measuring temperature $\pm 5°C$, and to settle,

(C) a second equipment vessel connected to equipment vessel (B) in a way that clarified liquid phase from equipment vessel (B) can be transferred to equipment vessel (C) equipped with a calibrated pH probe, and, optionally,

(D) a piping connecting equipment vessel (C) and the reaction vessel in which step (b) is performed.

2. Process according to claim 1 comprising the additional step (d) of automatically adjusting the addition speed of solutions ($\alpha$) and ($\beta$) and, if applicable, solution ($\gamma$), in case the pH value measured in step (c) deviates from a targeted pH value by more than 0.03 units.

3. Process according to claim 1 or 2 wherein the particulate mixed transition metal precursor is selected from hydroxides, carbonates, oxyhydroxides and oxides of TM wherein TM is a combination of metals according to general formula (I)

$$(Ni_aCo_bMn_c)_{1-d}M_d \qquad (I)$$

with

a being in the range of from 0.6 to 0.98,
b being in the range of from zero to 0.2,
c being in the range of from zero to 0.2, and
d being in the range of from zero to 0.1,
M is selected from Mg, Al, Ti, Zr, Mo, W, Nb, and Ta,
a + b + c = 1 and b + c > zero.

4. Process according to any of the preceding claims wherein slurry from which the pH value has been determined is not returned to the reaction vessel in which step (b) is performed.

5. Process according to any of the preceding claims wherein the pre-defined temperature in equipment vessel (C) is in the range of from 20 to 25°C.

6. Process according to any of the preceding claims wherein a compound of a metal M selected from Mg, Al, Ti, Zr, Mo, W, Nb, and Ta is added as an aqueous solution ($\delta$) or in solution ($\alpha$).

7. Process according to any of the preceding claims wherein in equipment vessel (B), at least 70% of the solids are removed by sedimentation, and their transfer to equipment vessel (C) is avoided.

8. Set-up comprising

(A) a piping connected to a reaction vessel, and having an inlet from said reaction vessel,
(B) a first equipment vessel connected to the piping (A) wherein said equipment vessel has a heating or cooling element, and space for a slurry to settle,
(C) a second equipment vessel connected to equipment vessel (B) in a way that clarified liquid phase from vessel (B) can be transferred to vessel (C) equipped with a calibrated pH probe, and, optionally,
(D) a piping connecting equipment vessel (C) to the reaction vessel.

9. Set-up according to claim 8 wherein equipment vessel (B) comprises a connection to equipment vessel (C) that may be opened and closed and that is attached to equipment vessel (B) in the upper half height.

10. Set-up according to claim 8 or 9 wherein equipment vessel (C) comprises a heating or cooling element.

11. Set-up according to any of claims 8 to 10 wherein equipment vessel (B) is tube-shaped with a length to diameter ratio in the range of from 20:1 to 50:1.

12. Set-up according to any of claims 8 to 11 wherein the equipment vessel (C) is equipped with a retractable fitting by which the pH measurement, the pH probe calibration, pH probe cleaning and pH probe storage is fully automated.

8

**13.** Set-up according to any of claims 8 to 12 wherein equipment vessel (B) is arranged vertically or with an inclination in the range of from 1 to 45°.

Figure 1: Equipment vessel (B.1)

Figure 2: Equipment vessel (C.1)

Europäisches
Patentamt
European
Patent Office
Office européen
des brevets

# EUROPEAN SEARCH REPORT

**Application Number**

EP 23 21 5890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 225 591 A1 (SUMITOMO METAL MINING CO [JP]) 4 October 2017 (2017-10-04) * claims; examples * ----- | 1-13 | INV. C01G53/00 |
| X | WO 2023/135055 A1 (BASF SE [DE]) 20 July 2023 (2023-07-20) * Synthesis of an precursor P-CAM.1 * ----- | 1-13 | |
| X | EP 3 774 018 B1 (BASF SE [DE]) 30 August 2023 (2023-08-30) * example 1 * ----- | 1-13 | |
| X | US 2014/186710 A1 (RYOSHI KAZUOMI [JP] ET AL) 3 July 2014 (2014-07-03) * claims; example 1 * ----- | 1-13 | |
| X | CN 105 355 902 A (LANZHOU JINCHUAN ADVANGCED MATERIALS TECHNOLOGY CO LTD) 24 February 2016 (2016-02-24) * claims; examples * ----- | 1-13 | |
| X | CN 104 966 820 A (GUANGZHOU LIBODE NEW MATERIAL CO LTD) 7 October 2015 (2015-10-07) * claims; example 2 * ----- | 1-13 | TECHNICAL FIELDS SEARCHED (IPC) C01G |

The present search report has been drawn up for all claims

| Place of search | Date of completion of the search | Examiner |
|---|---|---|
| Munich | 22 May 2024 | Nobis, Barbara |

EPO FORM 1503 03.82 (P04C01)

## ANNEX TO THE EUROPEAN SEARCH REPORT
## ON EUROPEAN PATENT APPLICATION NO.

EP 23 21 5890

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2024

| Patent document cited in search report | | Publication date | Patent family member(s) | | Publication date |
|---|---|---|---|---|---|
| EP 3225591 | A1 | 04-10-2017 | CN | 107001070 A | 01-08-2017 |
| | | | EP | 3225591 A1 | 04-10-2017 |
| | | | JP | 6287970 B2 | 07-03-2018 |
| | | | JP | 2016088834 A | 23-05-2016 |
| | | | US | 2017305757 A1 | 26-10-2017 |
| WO 2023135055 | A1 | 20-07-2023 | NONE | | |
| EP 3774018 | B1 | 30-08-2023 | AU | 2019245828 A1 | 15-10-2020 |
| | | | CN | 111902208 A | 06-11-2020 |
| | | | EP | 3774018 A1 | 17-02-2021 |
| | | | ES | 2964352 T3 | 05-04-2024 |
| | | | FI | 3774018 T3 | 17-10-2023 |
| | | | JP | 2021519259 A | 10-08-2021 |
| | | | JP | 2023078253 A | 06-06-2023 |
| | | | KR | 20200133750 A | 30-11-2020 |
| | | | US | 2021024371 A1 | 28-01-2021 |
| | | | WO | 2019185433 A1 | 03-10-2019 |
| US 2014186710 | A1 | 03-07-2014 | CN | 103915618 A | 09-07-2014 |
| | | | EP | 2749537 A1 | 02-07-2014 |
| | | | JP | 5880426 B2 | 09-03-2016 |
| | | | JP | 2014129188 A | 10-07-2014 |
| | | | US | 2014186710 A1 | 03-07-2014 |
| CN 105355902 | A | 24-02-2016 | NONE | | |
| CN 104966820 | A | 07-10-2015 | NONE | | |

EPO FORM P0459

For more details about this annex : see Official Journal of the European Patent Office, No. 12/82